# FASCICULE DE BREVET EUROPEEN

(11) **EP 0 749 218 B1**
(45) Date de publication et mention de la délivrance du brevet: **05.01.2000**
(21) Numéro de dépôt: 96401241.3
(22) Date de dépôt: 10.06.1996
(51) Int. Cl.: H04B 7/185

(54) **Système de communication par satellites à défilement, station et terminal y inclus**
Niedrig fliegende Satelliten-Kommunikationsanordnung , Station un Endgerät dafür
Low orbiting satellite communication system, station and terminal therefor

(30) Priorité: 12.06.1995 FR 9506931
(43) Date de publication de la demande: 18.12.1996
(73) Titulaire: ALCATEL, 75008 Paris (FR)
(72) Inventeur: Sauvageot, Anne, 75006 Paris (FR); Rouffet, Denis, 92100 Boulogne Billancourt (FR); Casasoprana, Didier, 78100 St. Germain en Laye (FR)
(74) Mandataire: Lamoureux, Bernard

(56) Documents cités:
- EP-A- 0 177 966
- EP-A- 0 421 698
- EP-A- 0 536 033
- US-A- 5 404 568

## Description

La présente invention concerne un système de communication comprenant un ensemble de satellites à défilement établissant des liaisons de communication entre des stations au sol et des terminaux, une liaison de communication issue d'une station particulière et transitant par un satellite aboutissant à des terminaux associés situés dans une zone géographique limitée incluant cette station, fournissant une voie de communication à certains de ces terminaux associés au moins, cette liaison de communication étant par la suite basculée sur un autre satellite au cours d'un basculement de liaison de communication.

Un système de ce type est décrit dans le document "GLOBALSTAR : un système transparent", par D. Rouffet, publié dans la Revue des Télécommunications, 1er trimestre 1993 et dans les documents cités dans sa bibliographie, ainsi que dans EP-A-0 177 966 (Siemens).

Dans le système décrit dans ce document, les terminaux ne sont pas fixes, mais mobiles. Ils possèdent une antenne omnidirectionnelle et communiquent avec le ou les satellites leur fournissant le signal le plus fort. Les satellites, quant à eux couvrent chacun une pluralité de surfaces élémentaires au sol, par une pluralité de faisceaux de fréquences porteuses différentes, qui se déplacent en même temps que le satellite. Vu du sol, le défilement des surfaces élémentaires nécessite pour les stations et les terminaux de nombreux basculements de fréquence, ce qui nuit à l'efficacité de transmission globale. De plus, pour ce système, la largeur de bande pouvant être transmise entre une station et un terminal associé est ainsi relativement limitée.

La présente invention concerne, à l'opposé, un système dans lequel le nombre de basculements de fréquence est considérablement réduit, et qui permet des liaisons à large bande entre stations et terminaux.

Un système de communication permettant d'atteindre ces objectifs est décrit dans une demande de brevet déposée le même jour que la présente par la présente Demanderesse et dont le titre est "Système de communication par satellites à défilement, satellite, station et terminal y inclus ". Ce système se caractérise en ce que la liaison entre une telle station particulière et les terminaux qui lui sont associés est établie par un satellite appartenant audit ensemble de satellites, commandé pour établir à cet effet un faisceau orientable d'émission et un faisceau orientable de réception, pointant une ladite zone limitée incluant ladite station particulière, et supportant ladite liaison de communication.

L'emploi de faisceaux orientables maintenus fixes par rapport au sol permet qu'un même satellite établisse et maintienne une liaison de communication entre une station et ses terminaux, alors qu'il se déplace d'un horizon à l'autre de ceux-ci, c'est-à-dire aussi longtemps que possible, compte tenu du défilement des satellites, ce qui contribue à réduire le nombre de basculements de liaison et donc à améliorer l'efficacité globale de la transmission.

Par ailleurs, selon un procédé classique dans d'autres applications, non seulement les stations communiquent par l'intermédiaire des satellites à l'aide d'antennes orientables, ce qui nécessite au moins deux antennes par station, mais il en va de même en ce qui concerne les terminaux.

L'invention vise à permettre l'utilisation, dans le cadre d'un tel système, de terminaux n'ayant qu'une seule antenne, ou, plus largement, de terminaux impliquant une coupure de communication au moment d'un basculement de liaison.

Selon une caractéristique de l'invention, une liaison de communication entre une station particulière et les terminaux associés comprend une voie de transmission additionnelle aménagée pour permettre une transmission de données anticipée entre ladite station particulière et un terminal, avant que ce dernier exécute un basculement de liaison de communication, ces données étant utilisées pour maintenir la communication en local, de manière à palier une interruption de communication causée par ce basculement.

Ladite transmission de données anticipée comprend des données qui seraient normalement transmises entre ladite station particulière et ledit terminal pendant un intervalle de temps égal à celui qui est nécessaire, dans ledit terminal pour procéder à un basculement de liaison de communication.

Lorsque ledit terminal possède une antenne orientable unique, ledit intervalle nécessaire comprend essentiellement la durée maximale du changement de pointage de cette antenne d'un satellite du système de communication à un autre, ainsi que la durée nécessaire à la resynchronisation.

Ledit terminal comprend une chaîne de réception additionnelle faisant partie de ladite voie de transmission additionnelle et une mémoire pour mémoriser les données fournies par ladite chaîne de réception additionnelle, lorsqu'elles lui sont destinées par ladite station particulière, ainsi que des moyens de commutation additionnels intervenant lors d'un basculement de liaison de communication dans le terminal, pour que des données mémorisées soient couplées à ladite voie de communication de ce terminal, lorsque celle-ci est interrompue par un basculement de liaison de communication dans le terminal.

Selon une variante, la voie de transmission additionnelle utilisera la chaîne de réception de la voie de transmission nominale.

Avantageusement, ladite station, dans le cadre d'un basculement de liaison de communication, est aménagée pour transmettre vers un nouveau satellite, sans cesser de transmettre vers un ancien satellite, sélectionner un premier terminal actif, obtenir des données anticipées à transmette à ce terminal, transmettre lesdites données anticipées à l'intention de ce terminal sur ladite voie de transmission additionnelle, transmettre à ce premier terminal un ordre de basculement de liaison de communication, sélectionner un deuxième terminal actif, et ainsi de suite, jusqu'à ce que tous les terminaux actifs aient procédé au basculement de liaison de communication, après quoi ladite station particulière se sépare dudit ancien satellite.

Avantageusement encore, la sélection dudit premier terminal actif est accompagnée de la sélection d'un autre terminal actif au moins, ladite obtention de données concerne les terminaux actifs sélectionnés, de même que la transmission de ces données, et ainsi de suite, le basculement des terminaux ayant ainsi lieu par groupes.

Les différents objets et caractéristiques de l'invention seront maintenant détaillés dans la description qui va suivre d'un exemple de mise en oeuvre de l'invention, fourni à titre non limitatif, en se référant aux figures annexées qui représentent :
- la figure 1, une vue schématique d'un système de communication par satellites à défilement dans lequel peut être appliquée la présente invention,
- la figure 2, un plan schématique des équipements d'une station du système de la figure 1, agencés conformément à la présente invention,
- la figure 3, un plan schématique des équipements d'un terminal du système de la figure 1, agencés conformément à la présente invention.

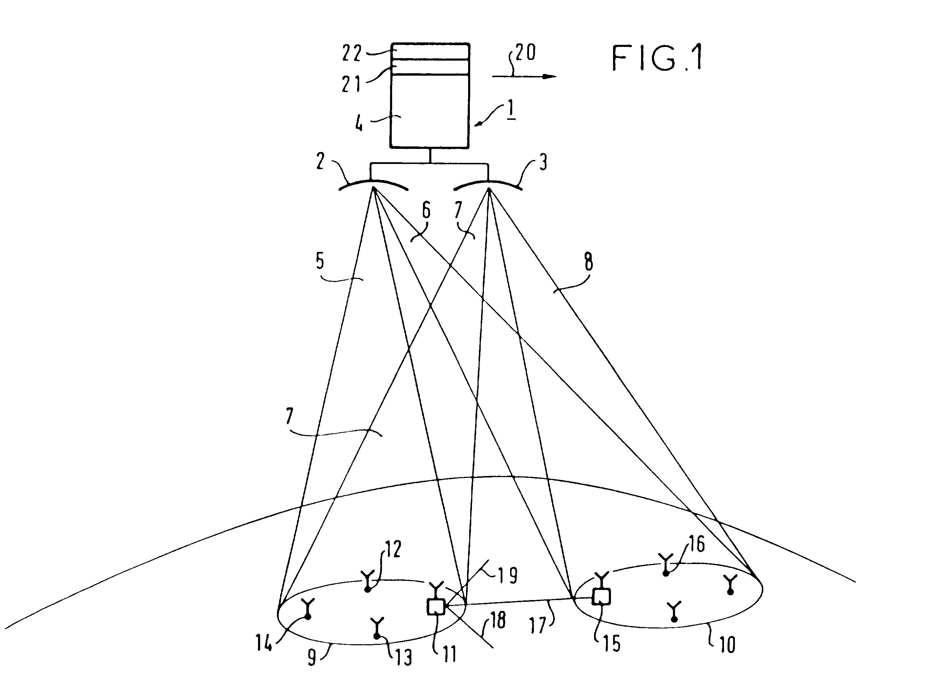

Le système de communication par satellites à défilement dans lequel s'applique la présente de l'invention est illustré, de façon très schématique par la figure 1. Il comprend un ensemble de satellites à défilement, dont un seul est représenté en 1 sur la figure. Ce satellite comprend une antenne de réception 2 et une antenne d'émission 3, entre lesquelles se place un répéteur 4. Les signaux effectivement reçus de la Terre par l'antenne de réception 2 sont amplifiés dans le répéteur 4 et retransmis vers la Terre par l'antenne d'émission 3. Ainsi, du point de vue gestion de la communication, le satellite 1 est transparent. Il ne constitue qu'un relais de transmission entre des sources et des destinataires de signaux les uns et les autres au sol. Cela réduit le coût du segment spatial.

Plus précisément, les antennes 2 et 3 engendrent chacune une multiplicité de faisceaux. L'antenne 2 engendre par exemple des faisceaux montants dont notamment les faisceaux 5 et 6. De même, l'antenne 3 engendre des faisceaux descendants, dont les faisceaux 7 et 8. Ces faisceaux peuvent avoir des caractéristiques différentes (fréquence, polarisation, largeur de bande, etc.) Comme il est bien connu, on peut utiliser pour cela des antennes réseaux. On en trouvera par exemple une description dans l'article " A Ku Band Antenna Program" de D. Michel et al, publié dans les minutes de la "15th International Communications Satellite Systems Conference", organisée par L'AIAA, du 27 février au 3 Mars, 1994. Un faisceau montant, 5 par exemple, et un faisceau descendant, 7 par exemple, couvrent une même zone géographiquement limitée, 9, à la surface de la Terre. De même, les faisceaux 6 et 8 couvrent une autre zone 10.

Dans une zone telle que 9, on trouve une station 11 et des terminaux 12, 13, 14. Le principe est que la station 11 communique avec les terminaux 12, 13, 14 par l'intermédiaire d'un satellite, 1, dont des faisceaux émission et réception sont orientés sur une zone, 9, qui contient la station et les terminaux associés. Les signaux envoyés par la station sont relayés vers les terminaux par le satellite. De même, les signaux envoyés par les terminaux sont relayés par le satellite vers la station. Cela établit entre eux une liaison de communication. Il en va de même en ce qui concerne la zone 10 dans laquelle se trouvent une station 15 et des terminaux 16 qui communiquent entre eux comme on vient de l'indiquer.

A titre d'exemple, l'exploitation de la liaison de communication entre une telle station et les terminaux associés peut être du type appliqué dans les systèmes de radiotéléphonie terrestres ; la liaison de communication offre alors plusieurs canaux étagés en fréquence, certains de ces canaux au moins supportant plusieurs voies par multiplexage temporel. Les terminaux appellent la station sur un canal d'accès qui leur est commun et la station répond sur un canal de commande. Une procédure classique, de type "ALOHA" ou "slotted-ALOHA", permet de régler les conflits d'accès au canal d'accès. Le canal de commande permet d'affecter une voie temporelle entre un terminal et la station, dans chaque sens de transmission. A partir de ce moment la communication peut avoir lieu, par exemple entre le terminal 14 et la station 11. Celle-ci peut elle-même connecter ce terminal 14 à un autre terminal, 12 par exemple, par des moyens similaires. Elle peut aussi, par des liaisons 17, 18, 19, prolonger la communication vers d'autres stations, notamment la station 15, ou vers d'autres réseaux, selon le lieu de raccordement d'un autre terminal auquel demande à accéder le terminal 14.

Les liaisons entre stations peuvent être des liaisons terrestres. Ces liaisons peuvent également être des liaisons par satellite. Les mêmes satellites peuvent être employés à cette fin. Ils contiennent alors un système de communication additionnel, semblable à celui de l'invention, réservé aux communications entre stations et dimensionné en conséquence. Les zones au sol, en particulier seront assez grandes pour comprendre plusieurs stations.

La liaison de communication entre la station 11 et les terminaux associés 12, 13, 14, le satellite étant transparent, est donc une liaison multiplexée de la station vers tous les terminaux. Elle peut comprendre un ou plusieurs canaux séparés en fréquence et sur chacun d'eux une ou plusieurs voies à multiplexage temporel, par exemple à multiplexage temporel asynchrone. Il suffit, dans le cadre de la présente invention d'indiquer qu'elle emploie des techniques bien connues et éprouvées dans le domaine des communications terrestres.

Dans le système auquel s'adresse l'invention, le satellite 1 est un satellite à défilement qui se déplace selon la flèche 20. Cela signifie que les faisceaux 5 à 8, pour viser constamment les zones 9 et 10 doivent être pointés vers ces zones et les suivre. Le satellite 1 comprend à cette fin un dispositif de pointage de faisceaux 21, comprenant une table d'éphémérides lue périodiquement et qui fournit les coordonnées de pointage des faisceaux au fur et à mesure du déplacement du satellite, afin que les faisceaux demeurent pointés sur les zones 9 et 10, tant que le satellite 1 est en vue de celles-ci. Des antennes réseaux du type mentionné précédemment permettent de faire face à ce besoin.

Par ailleurs, le satellite 1 se déplaçant cessera finalement d'être en visibilité de la zone 9 par exemple. Avant cela, les faisceaux 5 et 7 devront être éteints. Un autre satellite, semblable au satellite 1 sera utilisé, à la place du satellite 1, pour, à l'aide de faisceaux semblables aux faisceaux 5 et 6, maintenir la liaison de communication entre la station 11 et les terminaux 12, 13, 14. Cela se produira tout comme lorsque le satellite 1 est arrivé antérieurement en vue des zone 10 et 9.

Pour ce faire, le satellite comprend des moyens d'établissement de faisceaux 22, qui causent l'établissement de faisceaux propres à établir les liaisons de communication nécessaires pour les zones que le satellite rencontre sur sa route.

La route du satellite étant connue des stations, chacune d'elle demande au satellite 1, lorsqu'il se lève à son horizon, d'établir les faisceaux qui lui sont nécessaires. C'est ainsi que la station 11, voyant s'élever le satellite 1 à l'horizon, lui adresse un message, sur un canal de commande non représenté sur la figure 1, adressé aux moyens d'établissement de faisceaux 22, pour que le satellite établisse les faisceaux 5 et 6. Bien entendu, les stations telles que 11, en rapport entre elles par les liaisons telles que 17, 18, 19, coordonnent au préalable leurs demandes de mise en liaison en tenant compte de la capacité de communication du satellite, afin que les demandes des différentes stations puissent toujours être satisfaites.

Additionnellement, la station 11 est agencée pour commander une mise en liaison au satellite 1 en lui transmettant des données qui, d'une part, l'identifient elle-même et, d'autre part, spécifient les faisceaux à établir ; de son côté, le satellite est agencé pour vérifier l'appartenance de la station au système de communication et pour établir en conséquence les faisceaux qu'elle demande. Il s'agit là de protéger l'accès au satellite contre toute intrusion frauduleuse.

Selon une variante, les faisceaux sont établis à partir de données préalablement enregistrées dans le satellite et utilisées au fur et à mesure de la progression du satellite autour de la Terre.

Selon une autre variante, les données sont stockées dans les stations et fournies au satellite au fur et à mesure de sa progression.

Il reste à considérer que le système de communication de l'invention comprend un ensemble de satellites capables de fournir en permanence les liaisons de communication requises par chacune des stations pour communiquer avec les terminaux associés de sa zone et que, corrélativement, chacune des stations, pour être en mesure de fournir à ses terminaux associés un service permanent doit voir toujours un satellite au moins, apte à lui fournir une liaison de communication avec les terminaux qui lui sont associés, mais voir aussi un deuxième satellite s'élevant au-dessus de l'horizon alors que celui qui la met en liaison avec ses terminaux n'est pas encore trop éloigné.

Cela sous-entend que les stations comportent au moins deux antennes, associées à deux chaînes radio-électriques, afin de pouvoir commuter la liaison de communication d'un "ancien" satellite à un "nouveau" satellite, sans perte d'information de communication. Ces antennes sont des antennes orientables à grand gain.

La présente invention concerne plus particulièrement le problème que posent les terminaux. Ils devront également être pourvus d'antennes directionnelles. On prévoirait normalement que chaque terminal soit équipé de deux antennes directionnelles au moins, dans les mêmes conditions que les stations. Pour des raisons économiques, ces antennes seraient de petites dimensions, 30 cm de diamètre par exemple. De telles antennes orientables existent dèjà sur le marché, par exemple pour la réception directe de programmes de télévision en provenance de satellites géostationnaires. Toutefois, bien que leur coût soit effectivement modéré, un système de deux antennes est encore relativement onéreux. L'invention vise ainsi à offrir une solution plus économique à certains utilisateurs de terminaux au moins.

Le système de l'invention permet que ces terminaux n'aient qu'une seule antenne orientable, à faible coût, du type indiqué. Pour cela, les stations et les terminaux sont aménagés pour qu'une voie de transmission additionnelle permette une transmission de données anticipée entre une station particulière et un terminal, avant que ce dernier exécute un basculement de liaison de communication, ces données étant destinées à palier une interruption de communication qui serait causée par ce basculement de liaison de communication.

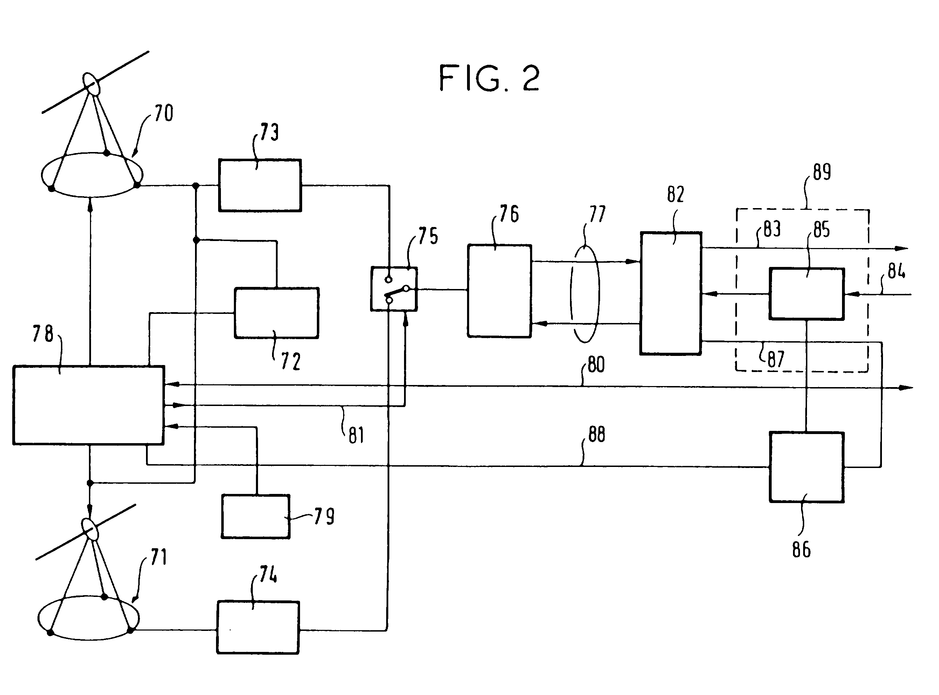

La figure 2 représente de façon schématique, une station conforme à l'invention.

La station de la figure 2 comprend deux antennes 70 et 71, couplées chacune à une chaîne d'émission/réception 73, 74 couplées, l'une ou l'autre, par un commutateur inverseur 75, à un ensemble de modulation/démodulation 76 menant à une interface utilisateur 77. Les deux antennes sont orientées par un processeur de commande 78 disposant pour cela d'une base de données 79, à l'instar de ce qui a été décrit pour le satellite en se référant à la figure 4.

Additionnellement, une voie de transmission de données 80 permet au processeur 78 de communiquer dans les deux sens avec une station pilote, par exemple, susceptible de lui fournir des données devant être enregistrées dans la base de données 79. Comme indiqué précédemment, cette voie de transmission de données peut être établie par l'intermédiaire des satellites du système de communication, dotés de moyens additionnels à cet effet.

Le processeur 78 et la base de données 79 orientent les faisceaux des antennes 70 et 71 vers un premier et un deuxième satellite. L'un des deux satellites établit une liaison de communication pour le compte de la station considérée, celui que vise l'antenne 71 par exemple, et le commutateur 75 est orienté en conséquence, comme indiqué sur la figure 2, sous la commande du processeur 78, par une voie de commande 81.

De cette façon, la station 11, par exemple, à travers cette interface utilisateur 77 communique avec le satellite et, à travers celui-ci, puisqu'il est transparent du point de vue communication, avec les terminaux de sa zone.

Lorsque le premier satellite s'éloigne, le commutateur inverseur 75 est basculé vers l'antenne 70 qui pointe vers un deuxième satellite qui sera utilisé pour établir la liaison de communication à la place du premier.

Additionnellement, la station dispose d'un équipement de voie de commande 72, couplés à l'antenne 70 ou 71 orientée par le processeur 78, pour la transmission de données vers le satellite. Cette voie de commande permet à la station de transmettre des données de commande au satellite, comme décrit précédemment.

Les données en question, parvenant à la station par la liaison 80 sont d'abord enregistrées par le processeur 78 dans la base de données 79 qui contient donc, non seulement les données de commande dont elle a besoin pour acquérir et poursuivre les satellites du système de communication, mais aussi celles qui doivent être transmises aux satellites.

La station de la figure 2 peut ainsi jouer le rôle de station pilote et transmettre vers chacun des satellites du système, un ensemble complet de données de commande.

Alternativement, chacune des stations semblables à celle de la figure 2 peut se borner à transmettre à chaque satellite avec lequel elle entre en relation les données qui lui permettront d'établir à son profit une liaison de communication.

Dans ce cas, la station doit également transmettre, plus tard, une commande de suppression de liaison.

Alternativement encore, la liaison de commande permet de fournir au satellite les données de commande dont il a besoin, à partir de la base de données 79, lorsqu'il en a besoin, au cours de sa progression.

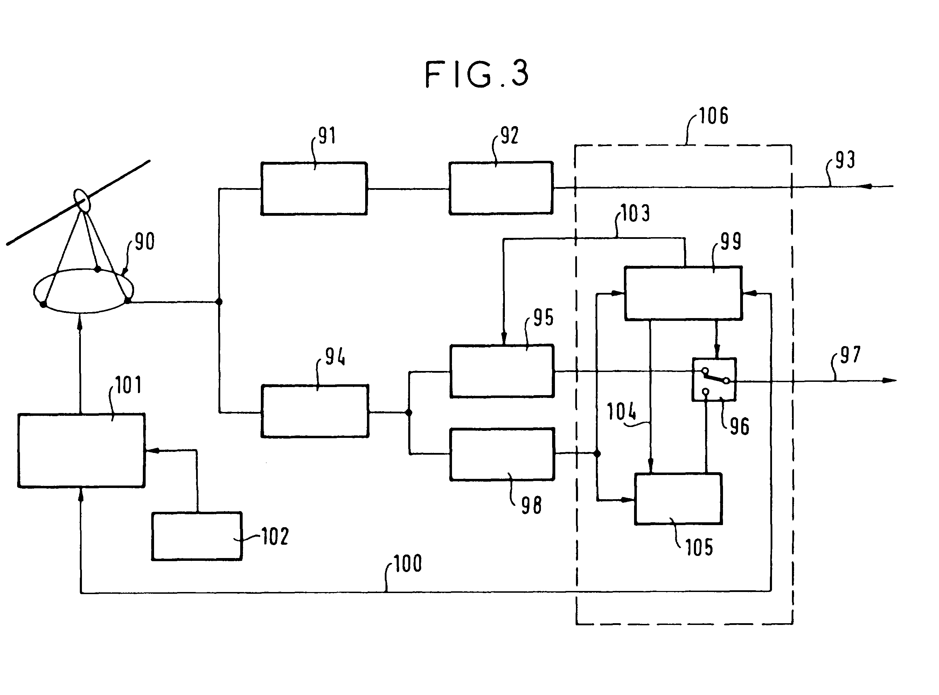

Pour les besoins spécifiques de la présente invention, la station de la figure 2 illustre en outre un dispositif séparateur de voies de communication 82. Ce dispositif est réalisé conformément à la technique évoquée d'utilisation des voies de communication offerte par la liaison de communication établie par le satellite 1 de la figure 1. Il permet de séparer notamment les voies de réception 83 et d'émission 84 affectées à un terminal actif quelconque, celui de la figure 3 par exemple. D'autres accès semblables correspondent à d'autres terminaux actifs au même moment. Les accès d'émission en général et l'accès d'émission 84 sont pourvus d'une mémoire tampon de données 85. Il est prévu enfin un gestionnaire de basculement 86, contrôlant la mémoire tampon 85, accèdant par ailleurs à une voie de transmission additionnelle de la liaison de communication constituée à l'interface 77 et communiquant par une liaison 88 avec le processeur 78.

Ces moyens fonctionnent de la façon exposée ci-après. Les données de la voie émission 84 sont stockées dans la mémoire tampon 85. Le processus qui permet l'appel de données à émettre et leur stockage en mémoire tampon est classique dans la gestion des bases de données. A cet égard, chaque voie de communication est constituée en serveur local, ce qui est représenté par le rectangle en pointillé 89, vis-à-vis d'un serveur distant non représenté. S'il s'agit d'un serveur de programme vidéo linéaire, tel qu'un programme de télévision ou un film cinématographique, la mémoire tampon appelle, par rafales de quelques secondes à quelques minutes de programme, des données qui sont ensuite transmises sur la voie de communication de façon quasi-continue. S'il s'agit d'une base de données ou de toute autre source de ce type, la mémoire tampon appelle de la même façon des écrans logiquement liés à celui qui vient d'être transmis et qui sont donc disponibles pour une réponse quasi immédiate aux commandes de l'utilisateur, reçues par la voie 83.

Le gestionnaire de basculement est informé par le processeur 78 de l'identité d'un terminal qui doit opérer bientôt un basculement de liaison de communication. Cela se place évidemment après que le processeur 78 de la station de la figure 2 ait éventuellement demandé à un nouveau satellite d'établir des faisceaux à son profit. Le gestionnaire 86 lit alors dans la mémoire tampon 85 correspondant à ce terminal des données qui seront normalement transmises à ce terminal pendant un intervalle de temps futur, pendant une durée égale à celle qui est nécessaire, dans le terminal, pour procéder à un basculement de liaison de communication. A la suite de ces données, un ordre de basculement de liaison de communication est transmis par le gestionnaire 86 au terminal considéré.

Le terminal reçoit ainsi, avant de procéder à un basculement, des données anticipées correspondant à la période de temps pendant laquelle, normalement, il devrait couper la communication pour procéder au basculement. Il utilisera ces données pour maintenir la voie de communication, en local, et ainsi masquer la coupure de communication.

Il s'agit donc d'une transmission de données anticipée. Il va de soit que l'invention ne s'applique que dans les cas de communications où il est possible d'anticiper de la façon décrite. Pour les autres types de communication, les moyens de l'invention peuvent être présents et peuvent être employés, mais ils ne procureront pas le résultat recherché qui est de masquer la coupure de communication. Celle-ci sera perceptible pour l'utilisateur.

Après avoir procédé comme on vient de l'indiquer, le gestionnaire 86 rend compte au processeur 78 qui lui demande alors de rééditer l'opération à propos d'un autre terminal actif, et ainsi de suite.

Lorsque le gestionnaire 86 rend compte de la commande de basculement pour le dernier terminal actif, le processeur 78 peut abandonner la voie de communication par l'ancien satellite, en lui demandant une suppression de faisceaux. Le nouveau satellite, sans autre action, est maintenant en charge de la liaison de communication au départ de la station de la figure 2.

Les mêmes moyens que l'on vient de décrire, à savoir le processeur 78, la liaison 88, le gestionnaire de basculement 86, la voie de transmission 87 et l'interface 77 permettent en outre à la station de la figure 2 d'atteindre et de commander le processeur de commande de poursuite de chacun des terminaux actifs (l'équivalent du processeur 78, mais dans le terminal). Les messages contenant l'information identifiant et permettant de poursuivre le satellite à poursuivre prochainement lui sont transmises tout à loisir alors qu'un basculement vient tout juste d'être opéré.

On n'a pas prévu de figure pour illustrer les terminaux à deux antennes qui sortent du cadre de la présente invention. La figure 2, en outre, s'applique largement au cas d'un tel terminal.

On peut indiquer que celui-ci, à l'instar d'une station, possède aussi deux antennes orientables et deux chaînes de réception/émission entre lesquelles un commutateur inverseur permet de choisir. L'interface utilisateur délivre le spectre entier de la liaison de communication. La voie de communication effectivement utilisée par le terminal dans sa relation avec la station est déterminée par la procédure de communication qui a été évoquée plus haut et qui, en tout cas, sort du cadre de la présente invention.

De même, le terminal possède un processeur et une base de données pour pointer ses antennes dans les conditions qui ont été spécifiées précédemment. Les données inscrites dans sa base de données lui sont transmises par la station à laquelle il est associée, par la liaison de commande comprenant les éléments 82 et 83, ou par tout autre équivalent de celle-ci. Selon une autre variante, les données sont directement introduites dans le terminal.

On va donc se tourner maintenant vers la figure 3 pour décrire schématiquement un terminal aménagé conformément à l'invention.

Ce terminal n'a qu'une antenne orientable 90, à deux degrés de liberté, couplée à une chaîne émission 91, précédée d'un modulateur 92 attaqué par une entrée utilisateur 93. L'antenne 90 alimente une chaîne réception 94 recevant la bande de fréquence de la liaison de communication. Elle est suivie d'un démodulateur 95, séparant une voie de communication laquelle, par un commutateur 96, normalement dans la position représentée, est transmise à une sortie utilisateur 97. Un satellite étant en vue et assurant la communication, les moyens que l'on vient de décrire mettent l'interface utilisateur 93, 97 en communication avec la station de la figure 2, voies 83, 84, par exemple.

Dans une forme de réalisation, la chaîne réception alimente aussi un autre démodulateur 98 isolant une voie de transmission additionnelle, qui correspond à la voie 87 de la figure 2. Selon une autre forme de réalisation, la voie de transmission additonnelle utilise la chaîne de réception 95 de la voie de transmission nominale, par exemple par utilisation d'un canal temporel particulier séparé par le démodulateur 95. Cette voie de transmission est couplée à une unité de basculement 99, pendant du gestionnaire de basculement 86 de la figure 2, mais opérant pour le seul terminal de la figure 3. Cet unité de basculement reçoit d'abord les informations relatives au prochain satellite à utiliser, qui sont transmises, par une liaison 100, à un processeur de commande d'antenne 101 pourvu d'une base de données 102. Les informations relatives à ce prochain satellite sont ainsi enregistrées dans la base de données 102. On notera que ces informations peuvent décrire complètement la trajectoire de ce prochain satellite, ou seulement permettre de se référer à une table d'éphémérides préalablement transmise ou chargée dans le terminal, ou seulement permettre de les calculer. Par ailleurs, l'unité 99 peut recevoir du processeur 78 de la figure 2 et, ultimement de la liaison 80, l'identification d'une voie de communication attribuée temporairement au terminal de la figure 3. Cette information est communiquée par la liaison 103 au démodulateur 95, pour la permettre de sélectionner cette voie de communication. En outre, le démodulateur 98 fournit également les données de communication anticipée définie précédemment. Dès qu'elle les reconnaît, l'unité 99, par une liaison de commande 104, en provoque l'enregistrement dans une mémoire tampon de basculement 105. Enfin, par le même canal, l'unité 99 reçoit la commande de basculement qu'elle enregistre elle-même et qui est transmise au processeur 101. Cette commande peut comporter une heure de mise en application. A cet instant précis, le processeur 101 réoriente l'antenne 90. La communication en cours serait donc coupée. Mais, simultanément, par une commande 107, il bascule l'inverseur 96 vers la mémoire 105, qu'il active par la liaison 104. L'information issue de la mémoire tampon 105 permet de maintenir le flot d'informations sur la sortie utilisateur 97.

Il est clair qu'à cet instant, toute donnée fournie sur l'entrée utilisateur 93 doit être utilisée en local ou stockée temporairement. Le cadre en pointillé 106 évoque à cet égard un équipement de terminal de données dont la fonction est de fournir sur la sortie 97 des données issues de la mémoire tampon 105 réclamées par des commandes reçues sur l'entrée 93 et utilisées en local ; on ne le décrira pas davantage cet aspect qui sort du cadre de l'invention. Dans le cas où la voie de communication acheminerait des données quasi-continues, les commandes reçues sur l'entrée utilisateur 93 ne pourront en général pas être exploitées en local. Elles seront stockées, mais cela ne présentera pas d'inconvénient, l'utilisateur acceptant aisément une certaine attente dans ces conditions.

Après la fin de la période de basculement, le processeur de commande informe l'unité 99 que le basculement est réalisé. L'unité 99 ramène l'inverseur 96 dans la position indiquée sur la figure 3. Dès cet instant la continuité de la voie de communication, par le démodulateur 95 et l'inverseur 96, est rétablie.

Le temps pendant lequel la continuité de la transmission en direction de la sortie utilisateur 97 a pu être maintenu grâce aux données inscrites à cet effet dans la mémoire tampon 105 est essentiellement le temps nécessaire au changement de pointage de l'antenne 90. S'il s'agit d'une antenne réseau, ce temps se chiffre en millisecondes. S'il s'agit d'une antenne mécanique, comme représenté, il se chiffre en secondes. La mémoire tampon 105 est dimensionnée en conséquence, de même que la voie de transmission additionnelle 87 (figure 2). Bien entendu, ce temps comprendra en outre des durées de resynchronisation ajoutées conformément aux techniques de transmission avant l'établissement de toute nouvelle voie de communication.

## Revendications

1. Système de communication comprenant un ensemble de satellites à défilement (1) établissant des liaisons de communication entre des stations au sol et des terminaux, une liaison de communication (5, 7 ; 6, 8) issue d'une station particulière (11 ; 15) et transitant par un satellite (1) aboutissant à des terminaux associés (12, 13, 14 ; 16) situés dans une zone géographique limitée (9 ; 10) incluant cette station (11 ; 15) et fournissant une voie de communication à certains de ces terminaux associés au moins, cette liaison de communication (5, 7 ; 6, 8) étant par la suite basculée sur un autre satellite au cours d'un basculement de liaison de communication, caractérisé en ce qu'une liaison de communication (5, 7 ; 6, 8) entre une telle station particulière et les terminaux associés comprend une voie de transmission additionnelle (87) aménagée pour permettre une transmission de données anticipée entre ladite station particulière et un terminal, avant que ce dernier exécute un basculement de liaison de communication, ces données étant utilisées pour maintenir la communication en local, de manière à palier une interruption de communication causée par ce basculement.

2. Système de communication conforme à la revendication 1, caractérisé en ce que ladite transmission de données anticipée comprend des données qui seraient normalement transmises entre ladite station particulière (11 ; 15) et ledit terminal (12, 13, 14 ; 16) pendant un intervalle de temps égal à celui qui est nécessaire, dans ledit terminal pour procéder à un basculement de liaison de communication.

3. Système de communication conforme à la revendication 2, caractérisé en ce que ledit terminal (12, 13, 14 ; 16) possède une antenne orientable unique (90) et en ce que ledit intervalle nécessaire comprend essentiellement la durée maximale du changement de pointage de cette antenne d'un satellite du système de communication à un autre, ainsi que la durée de resynchronisation.

4. Système de communication conforme à la revendication 1, 2 ou 3, caractérisé en ce que ledit terminal comprend une chaîne de réception additionnelle faisant partie de ladite voie de transmission additionnelle et une mémoire (105) pour mémoriser les données fournies par ladite chaîne de réception additionnelle, lorsqu'elles lui sont destinées par ladite station particulière, ainsi que des moyens de commutation additionnels intervenant lors d'un basculement de liaison de communication dans le terminal, pour que des données mémorisées soient couplées à ladite voie de communication de ce terminal, lorsque celle-ci est interrompue par un basculement de liaison de communication dans le terminal.

5. Système de communication conforme à la revendication 1, 2 ou 3, caractérisé en ce que ladite station, dans le cadre d'un basculement de liaison de communication, est aménagée pour transmettre vers un nouveau satellite, sans cesser de transmettre vers un ancien satellite, sélectionner un premier terminal actif, obtenir des données anticipées à transmettre à ce terminal, transmettre lesdites données anticipées à l'intention de ce terminal sur ladite voie de transmission additionnelle, transmettre à ce premier terminal un ordre de basculement de liaison de communication, sélectionner un deuxième terminal actif, et ainsi de suite, jusqu'à ce que tous les terminaux actifs aient procédé au basculement de liaison de communication, après quoi ladite station particulière se sépare dudit ancien satellite.

6. Système de communication conforme à la revendication 5, caractérisé en ce que, la sélection dudit premier terminal actif est accompagnée de la sélection d'un autre terminal actif au moins, ladite obtention de données concerne les terminaux actifs sélectionnés, de même que la transmission de ces données, et ainsi de suite, le basculement des terminaux ayant ainsi lieu par groupes.

## Claims

1. Communication system comprising a set of non-geostationary satellites (1) providing communication links between ground stations and terminals, a communication link (5, 7; 6, 8) from a particular station (11; 15) via a satellite (1) terminating at associated terminals (12, 13, 14; 16) in a limited geographical area (9; 10) including said station (11; 15) and providing a communication channel for at least some of said associated terminals, said communication link (5, 7; 6, 8) being subsequently transferred to another satellite during the process of communication link handover, characterized in that a communication link (5, 7; 6, 8) between a particular station and its associated terminals includes an additional communication channel (87) adapted to enable advance data to be transmitted between said particular station and a terminal before the latter executes communication link handover, said data being used to maintain local communication in order to mask any interruption of communication caused by said communication link handover.

2. Communication system according to claim 1, characterized in that said advance data transmission includes data that would normally be transmitted between said particular station (11; 15) and said terminal (12, 13, 14; 16) for a period equal to that required in said terminal to execute a communication link handover.

3. Communication system according to claim 2, characterized in that said terminal (12, 13, 14; 16) has a single steerable antenna (90) and in that said required period essentially comprises the maximal time to repoint said antenna from one satellite of the communication system to another and the resynchronization time.

4. Communication system according to claim 1, 2 or 3, characterized in that said terminal includes an additional receive subsystem that is part of said additional communication channel, a memory (105) for storing data supplied by said additional receive subsystem when transmitted to it by said particular station and additional switching means operative at the time of communication link handover in the terminal so that data in memory is fed to said communication channel of said terminal when it is interrupted by communication link handover in said terminal.

5. Communication system according to claim 1, 2 or 3, characterized in that, at the time of communication link handover, said station is adapted to transmit to a new satellite without ceasing to transmit to an old satellite, to select a first active terminal, to obtain advance data to be transmitted to said terminal, to transmit said advance data to said terminal over said additional communication channel, to transmit to said first terminal a communication link handover instruction, to select a second active terminal, and to continue this process until communication link handover has been completed in all active terminals, after which said particular station ceases to transmit to said old satellite.

6. Communication system according to claim 5, characterized in that selection of said first active terminal is accompanied by selection of at least one other active terminal, said data is obtained from the selected active terminals and said data is transmitted by said selected active terminals, as a result of which communication link handover is effected in groups of terminals.

## Patentansprüche

1. Kommunikationssystem, das ein Ensemble von sich bewegenden Satelliten (1) umfasst, die Kommunikationsverbindungen zwischen Stationen am Erdboden und Endgeräten etablieren, wobei eine von einer bestimmten Station (11; 15) ausgehende und über einen Satelliten (1) verlaufende Kommunikationsverbindung (5, 7; 6, 8) zu zugeordneten Endgeräten (12, 13, 14; 16) führt, die in einer begrenzten geographischen Zone (9; 10) angeordnet sind, die diese Station (11;15) enthält, und einen Kommunikationsweg für wenigstens bestimmte dieser Endgeräte liefert, wobei diese Kommunikationsverbindung (5, 7; 6, 8) nachfolgend im Laufe einer Kommunikationsverbindungs-Umschaltung auf einen anderen Satelliten umgeschaltet wird, dadurch gekennzeichnet, dass eine Kommunikationsverbindung (5, 7; 6, 8) zwischen einer solchen bestimmten Station und den zugeordneten Endgeräten einen zusätzlichen Kommunikaticnsweg (87) umfasst, der eingerichtet ist, um eine vorweggenommene Datenübertragung zwischen der bestimmten Station und einem Endgerät zu ermöglichen, bevor Letzteres eine Kommunikamionsverbindungs-Umschaltung ausführt, wobei diese Daten verwendet werden, um die Kommunikation lokal aufrechtzuerhalten, um eine durch diese Umschaltung verursachte Kommunikationsunterbrechung zu lindern.

2. Kommunikationssystem nach Anspruch 1, dadurch gekennzeichnet, dass die vorweggenommene Datenübertragung Daten umfasst, die normalerweise zwischen der bestimmten Station (11, 15) und dem Endgerät (12, 13, 14; 16) während eines Zeitintervalls übertragen würden, das gleich demjenigen ist, das bei dem Endgerät notwendig ist, um eine Kommunikationsverbindungs-Umschaltung auszuführen.

3. Kommunikationssystem nach Anspruch 2, dadurch gekennzeichnet, dass das Endgerät (12, 13, 14; 16) eine einzige orientierbare Antenne (90) besitzt, und dass das notwendige Intervall im Wesentlichen die maximale Dauer der Ausrichtungsänderung dieser Antenne von einem Satelliten des Kommunikationssystems auf einen anderen sowie die Dauer der Resynchronisation umfasst.

4. Kommunikationssystem nach Anspruch 1, 2 oder 3, dadurch gekennzeichnet, dass das Endgerät eine zusätzliche Empfangskette, die Teil des zusätzlichen Übertragungsweges ist, und einen Speicher (105) zum Speicnern der von der zusätzlichen Empfangskette gelieferten Daten, wenn sie von der bestimmten Station für sie bestimmt sind, sowie zusätzliche Umschaltmittel umfasst, die bei einer Kommunikationsverbindungs-Umschaltung in dem Endgerät wirksam werden, damit gespeicherte Daten an den Kommunikationsweg dieses Endgeräts gekoppelt werden, wenn dieser durch eine Kommunikationsverbindungs-Umschaltung in dem Endgerät unterbrochen wird.

5. Kommunikaztionssystem nach Anspruch 1, 2 oder 3, dadurch gekennzeichnet, dass die Stazion, im Rahmen einer Kommunikationsverbindungs-Umschaltung, eingerichtet ist, an einen neuen Satelliten zu übertragen, ohne mit dem Übertragen an einen alten Satelliten aufzuhören, ein erstes aktives Endgerät auszuwählen, an dieses Endgerät zu übertragende vorweggenommene Daten zu erhalten, die vorweggenommenen Daten an dieses Endgerät auf dem zusätzlichen Übertragungsweg zu übertragen, an dieses erste Endgerät einen Befehl zum Kommunikationsverbindungs-Umschalten zu übertragen, ein zweites aktives Endgerät auszuwählen, und so weiter, bis alle aktiven Endgeräten die Kommunikationsverbindungs-Umschaltung vorgenommen haben, wonach die bestimmte Station sich von dem alten Satelliten trennt.

6. Kommunikationssystem nach Anspruch 5, dadurch gekennzeichnet, dass die Auswahl des ersten aktiven Endgeräts begleitet ist von der Auswahl wenigstens eines anderen aktiven Endgeräts, wobei das Erhalten von Daten die ausgewählten aktiven Endgeräte betrifft, genauso wie die Übertragung dieser Daten, und so weiter, so dass die Umschaltung der Endgeräte gruppenweise stattfindet.
